# EUROPÄISCHE PATENTSCHRIFT

(11) **EP 0 824 411 B1**
(45) Veröffentlichungstag und Bekanntmachung des Hinweises auf die Patenterteilung: **15.09.1999**
(21) Anmeldenummer: 96907355.0
(22) Anmeldetag: 02.03.1996
(51) Int. Cl.: B60D 5/00, B62D 47/02

(54) **VORRICHTUNG ZUR VERHINDERUNG DER ÜBERDEHNUNG EINES FALTEN- ODER WELLENBALGELEMENTES**
DEVICE TO PREVENT THE OVER-EXPANSION OF CONCERTINA OR CORRUGATED BELLOWS COMPONENT
PROCEDE SERVANT A EMPECHER L'ALLONGEMENT EXCESSIF D'UN ELEMENT DE SOUFFLET A PLIS ANGULAIRES OU INCURVES

(30) Priorität: 03.05.1995 DE 19516171
(43) Veröffentlichungstag der Anmeldung: 25.02.1998
(73) Patentinhaber: HÜBNER Gummi- und Kunststoff GmbH, D-34123 Kassel (DE)
(72) Erfinder: KOCH, Robert, D-37242 Bad Sooden-Allendorf (DE)
(74) Vertreter: WALTHER, WALTHER & HINZ Patentanwälte
(86) Internationale Anmeldenummer: EP9600927
(87) Internationale Veröffentlichungsnummer: WO9634774

(56) Entgegenhaltungen:
- EP-A- 0 648 663
- DE-A- 2 212 613
- DE-A- 2 748 713
- DE-A- 4 034 984
- DE-C- 966 302
- US-A- 4 781 123

## Beschreibung

Die Erfindung betrifft eine verlängerbare Vorrichtung zur Verhinderung der Überdehnung eines Falten- oder Wellenbalgelementes eines durch einen Mittelrahmen geteilten Falten- oder Wellenbalges, der zwischen zwei gelenkig miteinander verbundenen Fahrzeugteilen angeordnet ist.

Gelenkfahrzeuge sind bekannt; sie bestehen aus zwei gelenkig miteinander verbundenen Fahrzeugteilen, die durch einen Falten- oder Wellenbalg miteinander verbunden sind. Gelenkfahrzeuge in Form von Gelenkbussen werden auf allen Straßen eingesetzt. Es ist üblich, daß solche Fahrzeuge eine Rampenfahrt von 8 % durchführen können müssen.

Um ein Durchhängen des Falten- oder Wellenbalges zu verhindern, ist ein Mittelrahmen vorgesehen, der den Falten-oder Wellenbalg mittig in zwei Falten- oder Wellenbalgelemente unterteilt.

Ein derartiger Mittelrahmen hat auch die Aufgabe, im Innenbereich des Busses Abschrankungen und Haltestangen aufzunehmen.

Aus dem Stand der Technik gemäß der DE-A 966 307 ist nun eine sogenannte Mittelrahmenstabilisierung bekannt, die dafür sorgt, daß der die Falten- oder Wellenbalgelemente verbindende Mittelrahmen zu den beiden gelenkig miteinander verbundenen Fahrzeugteilen immer den gleichen Abstand einnimmt. Diese Vorrichtung, die auch eine Überdehnung des Falten- bzw. Wellenbalges bzw. der einzelnen Elemente verhindert, ist überaus aufwendig und damit teuer in der Herstellung.

Die DE 40 34 984 zeigt eine Aufhängung für einen einteiligen freihängenden Faltenbalg, wobei der der Aufhängung dienende Galgen nicht in Richtung der Fahrzeuglängsachse verlängerbar ist.

Die DE-OS 28 48 713 behandelt eine Vorrichtung zur Beeinflussung des Knickwinkels für einen Gelenkzug.

Bei der aus der DE-OS 22 12 613 bekannten Vorrichtung handelt es sich um eine Balgverbindung für einen Straßenwagengelenkzug, bei dem der Faltenbalg durch einen Mittelrahmen In zwei gleiche Teile geteilt ist, wobei der Mittelrahmen zu einer Seite durch ein starres, d. h. nicht verlängerbares Gelenk mit dem einen Fahrzeugteil verbunden ist, und der Mittelrahmen zur anderen Seite hin durch zwei Teleskope mit dem gegenüberliegenden Fahrzeugteil verbunden ist. Hieraus folgt, daß sich entsprechend auch nur das eine Falten- oder Wellenbalgelement dehnt, wohingegen das andere Balgelement nicht verlängerbar ist.

Eine Vorrichtung der eingangs genannten Art ist aus der US-A 4,781,123 bekannt. Diese Vorrichtung besteht aus zwei Teleskopen, die an einem Ende Jeweils an einem Fahrzeugteil angeordnet sind, und mit ihrem anderen Ende den Mittelrahmen erfassen, der den Faltenbalg in zwei Balgelemente bzw. Balghälften teilt. Bei entsprechender Bewegung der beiden Fahrzeugteile relativ zueinander, wird durch diese bekannte Vorrichtung erreicht, daß sich der Mittelrahmen ständig mittig zwischen den beiden Fahrzeugtellen befindet. Eine derartige Vorrichtung ist aufgrund der Verwendung von zwei Teleskopen relativ aufwendig In der Herstellung und deswegen auch teuer. Darüber hinaus sind die Teleskope verschleißanfällig, da sie Wind und Wetter ausgesetzt sind, was sich insbesondere deswegen bemerkbar macht, als zwei Teleskope zur Anwendung kommen und die Wartung entsprechend teuer ist.

Der Erfindung liegt daher die Aufgabe zugrunde, eine Vorrichtung der eingangs genannten Art bereitzustellen, die zum einen einfach und preiswert in der Herstellung und Wartung ist, und die zum anderen eine Überdehnung der Balgelemente des Balges sicher verhindert.

Die Aufgabe wird erfindungsgemäß durch ein unter Zugbeanspruch verlängerbares Teleskop gelöst, wobei durch dieses Teleskop eines der beiden Fahrzeugteile mit dem Mittelrahmen verbindbar ist, wobei die Zugkraft zum Ausziehen des Teleskops geringer ist, als die Kraft, die erforderlich ist, um das Falten- oder Wellenbalgelement zu überdehnen. Bei dieser Konstruktion einer Vorrichtung zur Verhinderung der Überdehnung des Falten- oder Wellenbalgelementes wird von der Überlegung ausgegangen, daß es eigentlich völlig gleich ist, ob der Mittelrahmen, der auf dem die beiden Fahrzeugteile verbindenden Gelenk aufsitzt, sich genau mittig zwischen den beiden Fahrzeugteilen befindet, oder möglicherweise bei Auftreten entsprechender Fahrzeugbewegungen eine asymmetrischen Stellung zwischen den beiden Fahrzeugteilen einnimmt. Wesentlich ist ausschließlich, daß der Falten- oder Wellenbalg nicht überdehnt wird. Diese Gefahr besteht ausschließlich dann, wenn das Fahrzeug in hügeligem Gelände eingesetzt wird und hier auch nur dann, wenn das Fahrzeug über eine Kuppe fährt. Fährt das Fahrzeug hingegen durch ein Wellental, dann findet lediglich eine Stauchung des Falten- oder Wellenbalges statt, wodurch dieser jedoch keinen Schaden nimmt. D. h., daß die eingangs beschriebene Vorrichtung nur dann in Aktion tritt, wenn die Gefahr der Überdehnung eines der beiden Falten- oder Wellenbalgelemente besteht. Erst dann wird das andere Falten- oder Wellenbalgelement mitausgelenkt, um einer Zerstörung des einen Falten- oder Wellenbalgelementes entgegenzuwirken, das nicht mit einem entsprechenden Teleskop zur Verhinderung der Überdehnung des Falten oder Wellenbalgelementes versehen ist. Das deshalb, weil sich die Zugkraft des Federteleskops zu der erforderlichen Auszugskraft des Falten- oder Wellenbalgelementes addiert, das von dieser Vorrichtung überspannt wird weshalb diese Gesamtzugkraft immer größer als die Kraft, die erforderlich ist, um das eine Falten- oder Wellenbalgelement auseinanderzuziehen, das nicht von dem Federteleskop überspannt ist. Infolgedessen wird das eine nicht von dem Teleskop überspannte Falten- oder Wellenbalgelement bei entsprechender Fahrbewegung, nämlich bei Fahrt über eine Kuppe, zunächst gelängt, wobei dann bei Erreichen des kritischen Wertes aufgrund der zunehmenden Kraft das andere von dem Teleskop überspannte Falten- oder Wellenbalgelement ebenfalls gedehnt wird, so daß der Falten- oder Wellenbalg ohne Beschädigung den auftretenen Fahrbewegungen nachgeben kann.

Die erfindungsgemäße Vorrichtung ist insofern preiswerter, als die nach dem Stand der Technik bekannte, da nur ein einziges Wellen- oder Faltenbalgelement von der Vorrichtung überspannt wird.

Weiterhin vorteilhaft ist, daß diese Vorrichtung im Gegensatz zum Stand der Technik im wesentlichen verschleißfrei arbeitet. Beim Stand der Technik wird der Mittelrahmen ständig bewegt, wodurch die den Mittelrahmen führenden Elemente einem höheren Verschleiß unterworfen sind. Ein weiterer Vorteil besteht darin, daß zwei gleich lange Falten- oder Wellenbalgelemente eingesetzt werden können.

Vorteilhaft wird der Mittelrahmen durch die Vorrichtung gegen das eine Fahrzeugteil gespannt gehalten. Das heißt, daß der Mittelrahmen Im wesentlichen in seiner Lage fixiert ist, wenn man von dem Fall absieht, daß das Faltenbalgelement ausgezogen wird, das von dem Teleskop überspannt wird. Durch die Fixierung des Mittelrahmens wird dann auch die Möglichkeit eröffnet, Haltestangen und Abschrankungen am Mittelrahmen anzubringen.

Weiterhin Ist vorgesehen, daß die maximale Länge des Teleskops, das insbesondere als Federteleskop ausgebildet ist, der maximalen möglichen Länge des von dem Teleskop überspannten Falten- oder Wellenbalgelementes entspricht. Damit die Vorrichtung allen Fahrbewegungen nachgeben kann, ist das Element durch ein Kugelgelenk mit dem Mittelrahmen bzw. dem Fahrzeugteil verbindbar.

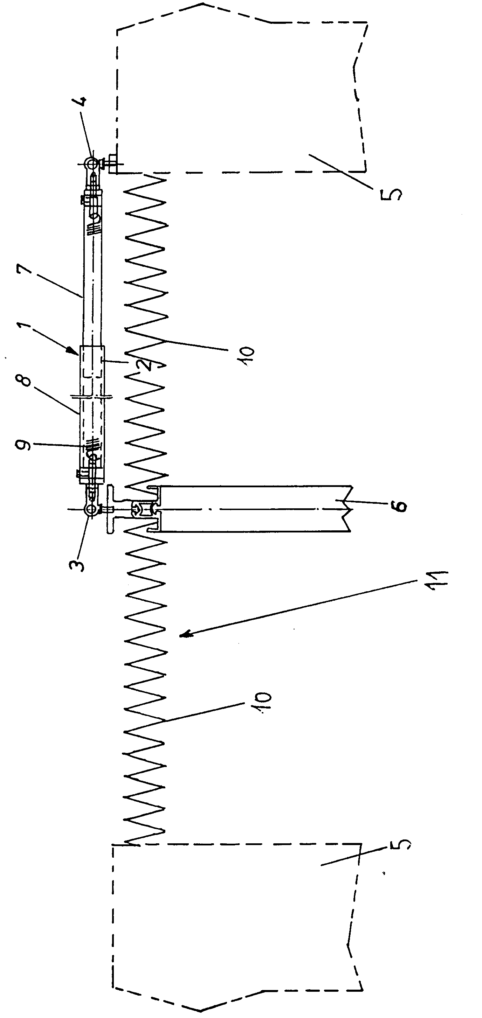

Anhand der Zeichnung wird die Erfindung nachstehend beispielhaft näher erläutert.

Die Vorrichtung zur Verhinderung der Überdehnung eines Falten- und Wellenbalgelementes 10 eines Falten- oder Wellenbalges 11 ist insgesamt mit 1 bezeichnet. Sie besteht aus dem Federteleskop 2, das endseitig jeweils ein Kugelgelenk 3 und 4 aufweist, durch das das mit 2 bezeichnete Federteleskop mit dem Fahrzeugteil 5 bzw. dem Mittelrahmen 6 verbunden ist.

Das Federteleskop 2 besteht aus einer Teleskopstange 7 und einer die Teleskopstange aufnehmenden Teleskophülse 8. In der Teleskophülse 8 ist eine Zugfeder 9 angeordnet, durch die die Teleskopstange 7 und die Teleskophülse zusammengezogen werden. Oder anders ausgedrückt, ist die Zugfeder mit den endseitig an der Teleskophülse bzw. der Teleskopstange angeordneten Kugelgelenken verbunden D.h., daß das zwischen Mittelrahmen und Fahrzeugteil angeordnete Falten- oder Wellenbalgelement, das von dem Teleskop überspannt wird, erst dann ausgelenkt wird, wenn die an dem Federteleskop angreifende Zugkraft aufgrund entsprechenden Fahrzeugbewegungen größer ist, als die Kraft der Feder 9. Die Kraft der Feder 9 muß allerdings geringer sein als die Kraft, die erforderlich ist, um das Faltenbalgelement zu überdehnen, da ansonsten die Gefahr besteht, daß das Faltenbalgelement, das nicht von dem Federteleskop überspannt wird, Schaden nimmt.

## Patentansprüche

1. Verlängerbare Vorrichtung zur Verhinderung der Überdehnung eines Falten- oder Wellenbalgelementes (10) eines durch einen Mittelrahmen (6) geteilten Falten- oder Wellenbalges (11), der zwischen zwei gelenkig miteinander verbundenen Fahrzeugteilen (5) angeordnet ist,
**dadurch gekennzeichnet,** daß
die Vorrichtung (1) als ein unter Zugbeanspruchung verlangerbares Teleskop (2) ausgebildet ist, wobei durch dieses Teleskop eines der beiden Fahrzeugteile (5) mit dein Mittelrahmen (6) verbindbar ist, wobei die Zugkraft zum Ausziehen des Teleskops (2) geringer ist, als die Kraft, die erforderlich ist, um das Falten- oder Wellenbalgelement (10) zu überdehnen.

2. Vorrichtung nach Anspruch 1,
**dadurch gekennzeichnet,** daß
durch die Vorrichtung (1) der Mittelrahmen (6) geben das eine Fahrzeugteil (5) gespannt gehalten wird.

3. Vorrichtung nach Anspruch 1,
**dadurch gekennzeichnet,** daß
das auf Zug beanspruchbare Element (2) ein Teleskop aufweist.

4. Vorrichtung nach Anspruch 3,
**dadurch gekennzeichnet,** daß
das Teleskop (2) als Federteleskop ausgebildet ist.

5. Vorrichtung nach Anspruch 3,
**dadurch gekennzeichnet,** daß
die maximale Länge des Telekops (2) der maximalen möglichen Längung des von dem Teleskop überspannten Falten- oder Wellenbalgelementes (10) entspricht.

6. Vorrichtung nach Anspruch 1,
**dadurch gekennzeichnet,** daß
das Element (2) durch Kugelgelenke (3,4) mit dem Mittelrahmen (6) bzw. mit dem Fahrzeugteil (5) verbindbar ist.

## Claims

1. Extensible device preventing an element of an expansion bellows or of a concertina bellows (10) from overstretching, said expansion bellows or concertina bellows (11) being divided by a central frame (6) and arranged between two hinge-linked vehicle parts (5),
**characterized in that** the device (1) is designed as a telescope (2) that may be lengthened by pulling, whereas this telescope is connecting one of the two vehicle parts (5) with the central frame (6), whereas the tractive force required to extend the telescope (2) is smaller than the force required to overstretch the expansion or concertina bellows element (10).

2. Device according to claim 1,
**characterized in that** the central frame (6) is kept in a stretched position against the one vehicle part (5) by the device (1).

3. Device according to claim 1,
**characterized in that** the element that may be lengthened by pulling is provided with a telescope (2).

4. Device according to claim 3,
**characterized in that** the telescope (2) is designed as a spring telescope.

5. Device according to claim 3,
**characterized in that** the maximum length of the telescope (2) corresponds to the greatest possible length of the expansion or concertina bellows element (10) stretched by said telescope.

6. Device according to claim 1,
**characterized in that** the element (2) may be connected to the central frame (6) or to the vehicle part (5) by ball-and-socket joints (3, 4).

## Revendications

1. Dispositif extensible servant à empêcher l'allongement excessif d'un élément de soufflet à plis ou ondulé (10), ledit soufflet à plis ou ondulé (11) étant séparé par un cadre central (6) et disposé entre deux parties de véhicule (5) reliées l'une à l'autre par articulation,
**caractérisé en ce que** le dispositif (1) est conçu comme un télescope (2) qui peut être allongé par traction, ledit télescope reliant l'une des deux parties de véhicule (5) au cadre central (6), la force de traction requise pour allonger le télescope (2) étant moins grande que la force nécessaire à allonger excessivement l'élément de soufflet à plis ou ondulé (10).

2. Dispositif selon la revendication 1,
**caractérisé en ce que** le dispositif (1) maintient le cadre central (6) tendu par rapport à l'une des parties de véhicule (5).

3. Dispositif selon la revendication 1,
**caractérisé en ce que** l'élément qui peut être allongé par traction est pourvu d'un télescope (2).

4. Dispositif selon la revendication 3,
**caractérisé en ce que** le télescope (2) est conçu comme un télescope à ressort.

5. Dispositif selon la revendication 3,
**caractérisé en ce que** la longueur maximale du télescope (2) correspond à la plus grande longueur possible de l'élément de soufflet à plis ou ondulé (10) enjambé par le télescope.

6. Dispositif selon la revendication 1,
**caractérisé en ce que** l'élément (2) peut être relié au cadre central (6) voire à la partie de véhicule (5) par des articulations à rotule (3, 4).
